# EUROPÄISCHE PATENTSCHRIFT

(11) **EP 3 696 335 B1**
(45) Veröffentlichungstag und Bekanntmachung des Hinweises auf die Patenterteilung: **07.08.2024**
(21) Anmeldenummer: 19156998.7
(22) Anmeldetag: 13.02.2019
(51) Int. Cl.: E03F 7/12

(54) **KANALINSPEKTIONS- UND/ODER WARTUNGSSYSTEM**
CHANNEL INSPECTION AND/OR MAINTENANCE SYSTEM
SYSTÈME D'INSPECTION DE CANAL ET/OU DE MAINTENANCE

(43) Veröffentlichungstag der Anmeldung: 19.08.2020
(73) Patentinhaber: iPEK International GmbH, 87477 Sulzberg (DE)
(72) Erfinder: Zahnd, Fabian, 87448 Waltenhofen (DE)
(74) Vertreter: 2s-ip Schramm Schneider Bertagnoll Patent- und Rechtsanwälte Part mbB

(56) Entgegenhaltungen:
- EP-A2- 0 640 821
- EP-A2- 0 911 452
- DE-A1- 102009 031 052
- DE-A1- 102013 010 584
- DE-U1- 29 922 616
- US-A- 5 018 545

## Beschreibung

### Gebiet der Erfindung

Die Erfindung betrifft ein Kanalinspektions- und /oder Wartungssystem, das zumindest ein Trägersystem, ein Satellitensystem und eine Führungseinrichtung aufweist, wobei die Führungseinrichtung dazu vorgesehen ist, das Satellitensystem aus einem Hauptkanal in einen vom Hauptkanal abzweigenden Seitenkanal einzuführen.

### Hintergrund der Erfindung

Auf dem Gebiet der Kanalinspektion bzw. Kanalwartung werden häufig sogenannte Satellitensysteme verwendet, die von einem Fahrwagen aus in einen, von einem Hauptkanal abgehenden, Seitenkanal eingeführt werden können. Das Satellitensystem kann hierbei als Schiebekamera ausgebildet sein, um den Seitenkanal zu inspizieren. Alternativ oder zusätzlich kann das Schiebesystem auch Manipulatoren aufweisen, um beispielsweise den Seitenkanal zu warten bzw. zu reinigen. Ein Beispiel eines solchen Manipulators ist eine Spüleinrichtung bzw. Spüldüse, mit der der Seitenkanal gereinigt werden kann.

Bei größeren Abständen zwischen dem Fahrwagen und dem Seitenkanal weist der Fahrwagen üblicherweise eine als Führungsrohr ausgestaltete Führungseinrichtung auf, wobei das Führungsrohr eine bestimmte Länge aufweist. Über das Führungsrohr wird das Satellitensystem vom Fahrwagen aus in den Seitenkanal hineingeschoben.

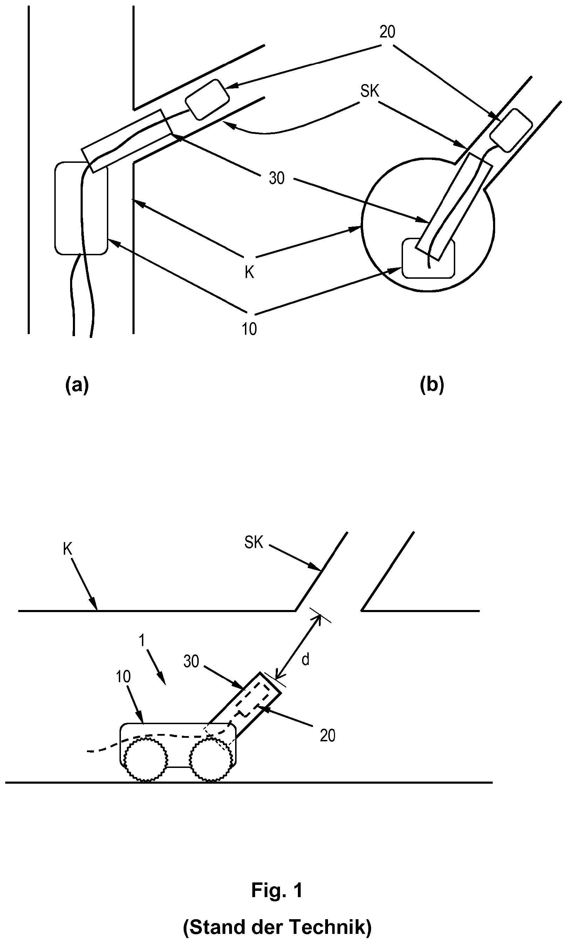

**Fig. 1** zeigt eine schematische Darstellung eines aus dem Stand der Technik bekannten Kanalinspektions- und/oder Wartungssystems, das in einem Hauptkanal K angeordnet ist. In Abbildung (a) ist ein solches System in einer Ansicht von oben, in Abbildung (b) in einer Ansicht von vorne, und in Abbildung (c) in einer Seitenansicht innerhalb eines Kanalsystems gezeigt.

An dem Fahrwagen 10 ist die als Führungsrohr ausgestaltete Führungseinrichtung 30 angeordnet, über die das Satellitensystem 20 vom Hauptkanal K aus in den Seitenkanal SK eingeschoben werden kann. Hierbei wird das Führungsrohr 30 so positioniert bzw. ausgerichtet, dass das vordere bzw. freie Ende des Führungsrohres 30 zum zu inspizierenden Seitenkanal SK zeigt bzw. leicht in diesen Seitenkanal hineinragt oder an diesem anliegt. Das Satellitensystem 20 wird dann über dieses Führungsrohr vom Fahrwagen 10 aus in den Seitenkanal SK eingeschoben und kann dann in dem Seitenkanal SK zum Zwecke der Inspektion und/oder Wartung vorgeschoben werden.

Bei Hauptkanälen mit unterschiedlichen Durchmessern ist es im Stand der Technik erforderlich unterschiedlich lange Führungsrohre bzw. Führungseinrichtungen 30 zu verwenden, um ein sicheres Einführen des Satellitensystems in einen vom Hauptkanal abzweigenden Seitenkanal zu gewährleisten.

Bei Hauptkanälen mit kleinen Durchmessern können keine langen Führungsrohre verwendet werden, da ein langes Führungsrohr nicht mehr zum Seitenkanal hin ausgerichtet werden kann.

Bei Hauptkanälen mit großen Durchmessern können hingegen kurze Führungsrohre 30, wie in Abbildung (c) gezeigt, nicht verwendet werden. Denn das Führungsrohr 30 kann zwar zum Seitenkanal SK hin ausgerichtet werden. Das Satellitensystem 20 kann allerdings aufgrund der Distanz d zwischen dem freien Ende des Führungsrohres 30 und dem Zugang zum Seitenkanal SK nicht mehr sicher in den Seitenkanal eingebracht werden.

Je nach Durchmesser des Hauptkanals ist es daher notwendig, den Fahrwagen mit einem Führungsrohr zu bestücken, dessen Länge an den Durchmesser des Hauptkanals angepasst ist. Bei sich verjüngenden Hauptkanälen bzw. bei Hauptkanälen deren Durchmesser sich ändert, kann es zudem erforderlich sein, das Führungsrohr während einer Wartung bzw. einer Inspektion auszutauschen, um ein für den jeweiligen Kanaldurchmesser geeignetes Führungsrohr zu verwenden.

Nachteilig ist demnach, dass für eine Vielzahl von unterschiedlichen Kanaldurchmessern eine entsprechende Anzahl von Führungsrohren vorgehalten werden muss, um einen Fahrwagen mit dem jeweils für den Kanaldurchmesser geeigneten Führungsrohr bestücken zu können.

Bei Kanälen mit sehr großen Kanaldurchmessern, beispielsweise von zwei Metern und mehr, müssen demnach entsprechend lange Führungsrohre an dem Fahrwagen angeordnet werden. Hierbei ist es ein Nachteil, dass der Fahrwagen samt Führungsrohr meist zu groß ist, um ihn in einem Stück durch einen Schacht in den Hauptkanal zu bringen. Der Anwender des Kanalinspektions- und/oder Wartungssystems ist dadurch gezwungen, den Fahrwagen und das Führungsrohr getrennt voneinander durch den Schacht in den Hauptkanal abzulassen und die Montage des Führungsrohrs an dem Fahrwagen im Kanal durchzuführen. Für den Anwender ist dies mit zusätzlichen Gefahren und Aufwand verbunden. Dasselbe Problem stellt sich auch beim Herausziehen des Kanalinspektions- und/oder Wartungssystems durch den Schacht, d.h. vor dem Herausziehen des Systems muss das Führungsrohr vom Fahrwagen getrennt werden und der Fahrwagen und das Führungsrohr müssen getrennt voneinander durch den Schacht herausgezogen werden. Zudem erfordern Vorschriften aus dem Bereich Arbeits- und Personenschutz weitreichende Absicherungsmaßnahmen, wenn ein Anwender in den Schacht hinabsteigen muss.

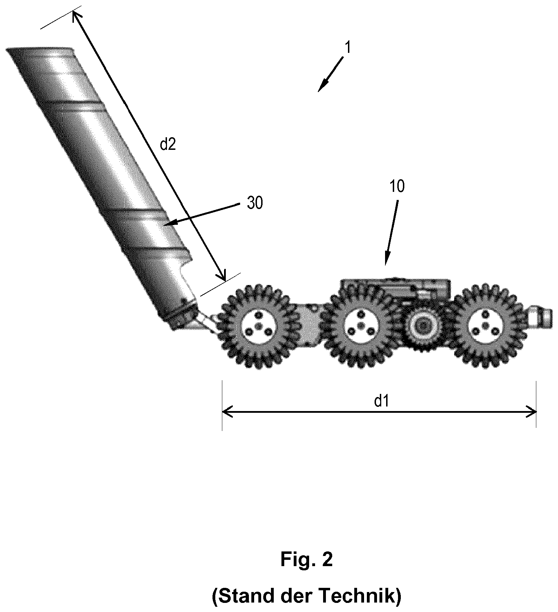

**Fig. 2** zeigt ein konkretes, aus dem Stand der Technik bekanntes Kanalinspektions- und/oder Wartungssystem 1 der iPEK International GmbH, Sulzberg, Deutschland.

Das Führungsrohr 30, das hier eine Länge d2 von etwa 50 cm aufweist, ist an einem Fahrwagen 10, der ebenfalls eine Länge d1 von etwa 50 cm aufweist, angeordnet. Dieses Kanalinspektions- und/oder Wartungssystem mit dem hier gezeigten Führungsrohr 30 eignet sich lediglich für den Einsatz in Kanälen mit einem Durchmesser von maximal 70 cm. Für den Einsatz in Kanälen mit einem Durchmesser von mehr als 70 cm muss der Fahrwagen 10 mit einem entsprechend längeren Führungsrohr bestückt werden.

Weitere Kanalinspektions- bzw. Wartungssysteme sind aus US 5 018 545 A und DE 10 2009 031052 A1 bekannt.

### Aufgabe der Erfindung

Aufgabe der vorliegenden Erfindung ist es daher, Lösungen bereitzustellen, die die aus dem Stand der Technik genannten Nachteile zumindest teilweise vermeiden und die einen Austausch von Führungsrohren zum Zweck der Anpassung des Führungsrohrs an den Kanaldurchmesser weitgehend überflüssig machen.

### Erfindungsgemäße Lösung

Erfindungsgemäß wird diese Aufgabe mit einem Kanalinspektions- und/oder Wartungssystem nach dem unabhängigen Anspruch gelöst. Vorteilhafte Ausgestaltungen der Erfindung sind in den abhängigen Ansprüchen angegeben.

Bereitgestellt wird demnach ein Kanalinspektions- und/oder Wartungssystem, zumindest aufweisend
- ein Trägersystem,
- ein Satellitensystem, das relativ zum Trägersystem bewegbar ist, und
- eine mit dem Trägersystem gekoppelte Führungseinrichtung, entlang der das Satellitensystem während einer Bewegung relativ zum Trägersystem führbar ist,
wobei
die Führungseinrichtung von einer Verstaustellung in wenigstens eine Gebrauchsstellung ausfahrbar ist.

Durch die ausfahrbare Ausgestaltung der Führungseinrichtung kann diese in der Verstaustellung sehr kompakte Abmessungen aufweisen, sodass das gesamte Kanalinspektions- und/oder Wartungssystem vollständig montiert durch den Schacht in den Kanal verbracht werden kann. Ein getrenntes Ablassen von Trägersystem und Führungseinrichtung durch den Schacht in den Kanal wird dadurch vermieden.

Zudem kann durch die ausfahrbare Ausgestaltung der Führungseinrichtung die effektive Länge der Führungseinrichtung (= Länge entlang der das Satellitensystem geführt werden kann) an den Durchmesser des Hauptkanals angepasst werden, und zwar nachdem das gesamte Inspektions- und/oder Wartungssystem durch den Schacht in den Kanal hinabgelassen wurde und ohne die Führungseinrichtung wechseln zu müssen. Zudem kann die effektive Länge der Führungseinrichtung im Kanal verändert werden, sodass die Länge der Führungseinrichtung beispielsweise an sich ändernde Durchmesser des Hauptkanals angepasst werden kann. Dadurch wird insgesamt vermieden, dass unterschiedlich lange Führungsrohre bzw. Führungseinrichtungen für unterschiedliche Kanaldurchmesser vorgehalten werden müssen und je nach Kanaldurchmesser ein Führungsrohr entsprechender Länge am Fahrwagen bzw. am Trägersystem montiert werden muss.

Durch die ausfahrbare Ausgestaltung der Führungseinrichtung kann beispielsweise ein erster Abschnitt der Führungseinrichtung ausfahrbar und ein zweiter Abschnitt der Führungseinrichtung aufklappbar ausgestaltet werden. In einer besonderen Ausgestaltung der Erfindung kann die Führungseinrichtung ausfahrbare und aufklappbare und ausrollbare Abschnitte aufweisen.

Eine Verstaustellung der Führungseinrichtung ist jene Stellung bzw. jener Zustand, bei dem die Führungseinrichtung die geringsten Abmessungen oder die geringste effektive Länge zur Führung des Satellitensystems aufweist. Je nach konkreter Ausgestaltung der Führungseinrichtung kann diese auch in der Verstaustellung zum Führen des Satellitensystems verwendet werden.

Eine Gebrauchsstellung der Führungseinrichtung ist jene Stellung bzw. jener Zustand, bei dem die effektive Länge entlang der das Satellitensystem geführt wird, größer ist als jene in der Verstaustellung.

Vorteilhaft ist es, wenn die Führungseinrichtung lösbar mit dem Trägersystem gekoppelt ist.

Durch die lösbare Anordnung bzw. Koppelung der Führungseinrichtung an dem Trägersystem kann die Führungseinrichtung bei Nichtgebrauch oder für den Fall, dass die Führungseinrichtung für eine Inspektion bzw. Wartung nicht benötigt wird, abgenommen werden. Andererseits kann eine Führungseinrichtung, die beispielsweise für Kanaldurchmesser bis 1,5 Meter geeignet ist, durch eine Führungseinrichtung ersetzt werden, die für Kanaldurchmesser über 1,5 Meter geeignet ist.

Die effektive Länge der Führungseinrichtung, entlang der das Satellitensystem während einer Bewegung relativ zum Trägersystem führbar ist, ist durch Ausfahren der Führungseinrichtung vergrößerbar.

Das heißt, dass durch das Ausfahren der Führungseinrichtung der Verfahrweg des Satellitensystems relativ zur Führungseinrichtung vergrößert werden kann. So ist beispielsweise der Verfahrweg bei einer ausgefahrenen Führungseinrichtung größer als bei einer nicht ausgefahrenen Führungseinrichtung.

Die Führungseinrichtung kann reversibel von der Verstaustellung in die wenigstens eine Gebrauchsstellung ausfahrbar sein.

Dadurch kann die Führungseinrichtung wieder von der Gebrauchsstellung in die Verstaustellung gebracht werden, beispielsweise um das gesamte Inspektions- und/oder Wartungssystem durch den Schacht aus dem Kanal ziehen zu können. Eine Demontage der Führungseinrichtung von dem Trägersystem wird dadurch vermieden.

In einer Ausgestaltung der Erfindung kann die Führungseinrichtung teleskopierbar ausgestaltet sein und von der Verstaustellung in die wenigstens eine Gebrauchsstellung ausfahrbar sein.

Vorteilhaft ist es hierbei, wenn relativ zueinander verschiebbare Teleskopelemente der teleskopierbaren Führungseinrichtung als Vollrohrprofile und/oder als Teilrohrprofile ausgestaltet sind.

Damit kann die teleskopierbare Führungseinrichtung entweder
- vollständig als Vollrohrprofil, oder
- vollständig als Teilrohrprofil, oder
- abschnittsweise als Vollrohrprofil und abschnittsweise als Teilrohrprofil ausgestaltet werden.

Als Vollrohrprofile der Teleskopelemente können beispielsweise Rohre mit einem runden, einem elliptischen oder einem rechteckigen Profilquerschnitt verwendet werden.

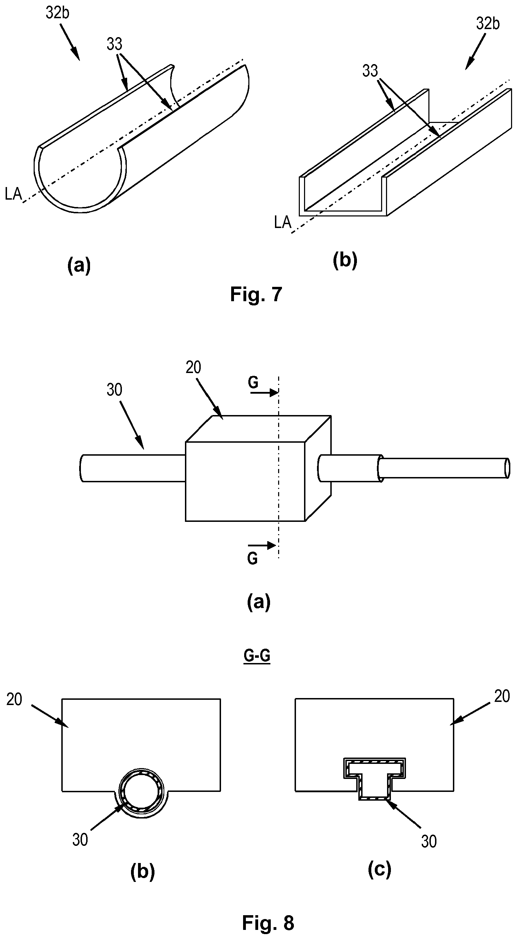

Teilrohrprofile sind Rohre mit beispielsweise einem runden, einem elliptischen oder einem rechteckigen Profilquerschnitt, wobei ein Teil der Seitenwandung des Rohres zwischen dem einem Rohrende und dem anderen Rohrende ausgespart bleibt, sodass die verbleibende Seitenwandung des Rohres zwei Profilkanten bildet, die sich von dem einem Rohrende zum anderen Rohrende erstrecken. Vorteilhafterweise verlaufen diese Profilkanten parallel zueinander und parallel zur Längsachse des Rohres. In Fig. 7 sind zwei Beispiele eines solchen Teilrohrprofils gezeigt.

In einer Ausgestaltung außerhalb der Erfindung kann die Führungseinrichtung eine Anzahl von Schwenkelementen aufweisen, die paarweise miteinander gekoppelt und relativ zueinander schwenkbar sind, wobei die Führungseinrichtung von der Verstaustellung in die wenigstens eine Gebrauchsstellung aufklappbar ist.

Die Schwenkelemente können als Vollrohrprofile und/oder als Teilrohrprofile ausgestaltet sein.

In einer Ausgestaltung außerhalb der Erfindung kann die Führungseinrichtung ein aufrollbares Federblech umfassen, wobei das Federblech von der Verstaustellung in die wenigstens eine Gebrauchsstellung ausrollbar ist.

Das Federblech kann angepasst sein in der Gebrauchsstellung die Form eines Teilrohrprofils anzunehmen.

Der Führungseinrichtung kann eine Antriebseinheit zugeordnet sein, die angepasst ist, die Führungseinrichtung von der Verstaustellung in die wenigstens eine Gebrauchsstellung auszufahren.

Mit der erfindungsgemäßen Lösung wird es einerseits ermöglicht ein und dieselbe Führungseinrichtung für Kanäle mit unterschiedlichen Durchmessern zu verwenden. Andererseits lässt sich die Führungseinrichtung so kompakt in eine Verstaustellung bringen, dass das Trägersystem samt daran angeordneter Führungseinrichtung durch einen Schacht in den Kanal verbracht werden kann und auch wieder durch den Schacht aus dem Kanal herausgenommen werden kann.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine schematische Darstellung eines aus dem Stand der Technik bekannten Kanalinspektions- und /oder Wartungssystems in einem Kanalsystem;
- Fig. 2: eine konkretes aus dem Stand der Technik bekanntes Kanalinspektionsund /oder Wartungssystem,
- Fig. 3: eine erste Ausgestaltung einer Führungseinrichtung eines erfindungsgemäßen Kanalinspektions- und /oder Wartungssystems;
- Fig. 4: eine Ausgestaltung einer Führungseinrichtung eines nicht erfindungs-gemäßen Kanalinspektions- und /oder Wartungssystems;
- Fig. 5: eine Ausgestaltung einer Führungseinrichtung eines nicht erfindungs-gemäßen Kanalinspektions- und /oder Wartungssystems;
- Fig. 6: ein erfindungsgemäßes Kanalinspektions- und /oder Wartungssystem mit einer Führungseinrichtung gemäß der Erfindung;
- Fig. 7: zwei Beispiele eines Teilrohrprofils; und
- Fig. 8: eine weitere Ausgestaltung einer erfindungsgemäßen Führungseinrichtung mit einem daran angeordneten Teleskopelement;

### Detaillierte Beschreibung der Erfindung

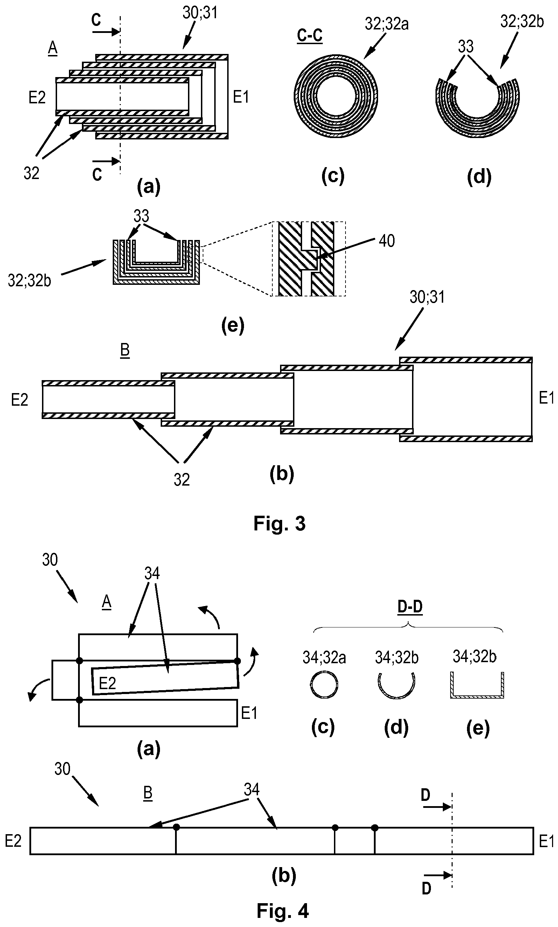

**Fig. 3** zeigt eine Führungseinrichtung 30 eines erfindungsgemäßen Kanalinspektions- und/oder Wartungssystems, wobei die Führungseinrichtung 30 hier als teleskopierbare Führungseinrichtung 31 ausgestaltet ist.

In Abbildung (a) ist ein Längsschnitt einer teleskopierbaren Führungseinrichtung 31 in einer Verstaustellung gezeigt, bei der die relativ zueinander verschiebbaren Teleskopelemente 32 vollständig eingefahren sind. Abbildung (b) zeigt die teleskopierbare Führungseinrichtung 31 in einer Gebrauchsstellung, bei der die relativ zueinander verschiebbaren Teleskopelemente 32 vollständig ausgefahren sind.

Die hier gezeigte, teleskopierbare Führungseinrichtung 31 weist vier relativ zueinander verschiebbare Teleskopelemente 32 auf, die hier als ineinander verschiebbare Elemente ausgestaltet sind. Bei Bedarf können allerdings auch mehr als vier oder weniger als vier relativ zueinander verschiebbare Teleskopelemente 32 vorgesehen sein. Gegenüber der Verstaustellung kann die effektive Führungslänge zum Führen des Satellitensystems um etwa das Vierfache vergrößert werden. Bei einer Länge eines Teleskopelements 32 von beispielsweise 50 Zentimetern kann so die effektive Länge der teleskopierbaren Führungseinrichtung 31 auf bis etwa 2 Meter vergrößert werden, sodass ein Kanalinspektions- und/oder Wartungssystems in Kanälen eingesetzt werden kann, die einen Durchmesser von etwa zwischen 50 Zentimetern und 2 Metern aufweisen. Ein Wechsel der Führungseinrichtung für Kanäle mit diesen Durchmessern kann so effektiv vermieden werden. Aufgrund der kompakten Länge von etwas mehr als einem halben Meter der teleskopierbaren Führungseinrichtung 31 in der Verstaustellung kann das gesamte Kanalinspektions-und/oder Wartungssystems ohne Demontage der Führungseinrichtung 31 durch einen Schacht in den Kanal abgelassen und durch den Schacht wieder herausgezogen werden. Rüstzeiten können so erheblich reduziert werden.

In Abbildung (c) ist ein Querschnitt der in Abbildung (a) gezeigten teleskopierbaren Führungseinrichtung 31 entlang der Schnittachse C-C gezeigt. Erkennbar ist hier, dass die teleskopierbare Führungseinrichtung 31 aus ineinander verschiebbaren Teleskopelementen 32 besteht, die jeweils als Vollrohrprofil 32a mit etwa kreisrundem Querschnitt bzw. Profilquerschnitt ausgestaltet sind. Andere Profilquerschnitte sind möglich, etwa elliptische oder rechteckige Profilquerschnitte.

In Abbildung (d) ist ein Querschnitt einer teleskopierbaren Führungseinrichtung gezeigt, bei der die ineinander verschiebbaren Teleskopelemente 32 als Teilrohrprofile 32b ausgestaltet sind. Beispiele für ein Teilrohrprofil sind mit Bezug auf Fig. 7 gezeigt. Die Teilrohrprofile 32b weisen axial und vorzugsweise parallel verlaufende Profilkanten 33 auf.

In Abbildung (e) ist ein Querschnitt einer teleskopierbaren Führungseinrichtung 31 gezeigt, wobei die ineinander verschiebbaren Teleskopelemente 32 als Teilrohrprofile 32b ausgestaltet sind, wobei die Profilquerschnitte die Form eines U-Profils aufweisen.

Die teleskopierbare Führungseinrichtung 31 kann Führungsmittel 40 aufweisen, entlang der die einzelnen Teleskopelemente beim Ausfahren bzw. beim Einfahren relativ zueinander bewegt werden. Beispielsweise kann zwischen zwei benachbarten Teleskopelementen 32 eine Nut-Feder-Linearführung 40 vorgesehen sein. Mit Hilfe solcher Führungsmittel 40 wird einerseits eine exakte axiale Bewegung der Teleskopelemente relativ zueinander gewährleistet. Andererseits wird ein radiales Bewegen der Teleskopelemente relativ zueinander effektiv verhindert.

Derartige Führungsmittel 40 können auch bei den in Abbildung (c) und in Abbildung (d) gezeigten Profilquerschnitten vorgesehen sein.

In einer besonderen Ausgestaltung der teleskopierbaren Führungseinrichtung 31 können als Vollrohrprofil 32a ausgestaltete Teleskopelemente mit als Teilrohrprofil 32b ausgestalteten Teleskopelementen kombiniert werden, sodass die Führungseinrichtung 31 beispielsweise abschnittsweise als Vollrohrprofil und abschnittsweise als Teilrohrprofil ausgestaltet sein kann.

**Fig. 4** zeigt eine Ausgestaltung einer Führungseinrichtung eines nicht erfindungsgemäßen Kanalinspektions- und/oder Wartungssystems. Die Führungseinrichtung 30 ist hier als aufklappbare Führungseinrichtung ausgestaltet, die eine Anzahl von Schwenkelementen 34 aufweist. Die Schwenkelemente 34 sind paarweise so miteinander gekoppelt, dass sie relativ zueinander schwenkbar sind und in eine kompakte Verstaustellung zusammengeklappt werden können, wie in Abbildung (a) gezeigt. Die in Abbildung (a) gezeigte Führungseinrichtung ist in Abbildung (b) in der Gebrauchsstellung, d.h. im aufgeklappten Zustand gezeigt.

Die einzelnen Schwenkelemente 34 der Führungseinrichtung 30 können beispielsweise mittels Scharnieren miteinander gekoppelt sein, die mit Stellmitteln, vorzugsweise unabhängig voneinander angetrieben werden können.

In der Gebrauchsstellung, wie in Abbildung (b) gezeigt, sind die Schwenkelemente 34 der Führungseinrichtung 30 vorzugsweise so relativ zueinander angeordnet, dass die gesamte Führungseinrichtung 30 geradlinig ausgerichtet ist, sodass eine gerade bzw. lineare Führung des Satellitensystems 20 entlang der Führungseinrichtung 30 erfolgen kann. Möglich ist aber auch eine Anordnung der Schwenkelemente 34 derart relativ zueinander, dass die Führungseinrichtung 30 insgesamt leicht bogenförmig verläuft. Die Schwenkelemente 34 selbst können ebenfalls einen leicht bogenförmigen Verlauf aufweisen.

In den Abbildungen (c), (d) und (e) der Fig. 4 sind mögliche Querschnitte eines Schwenkelementes 34 entlang der Schnittachse D-D gezeigt. Abbildung (c) zeigt ein Schwenkelement 34 mit einem weitgehend kreisrunden Profilquerschnitt. Das Vollrohrprofil gemäß Abbildung (c) kann auch einen elliptischen, rechteckigen oder mehreckigen Profilquerschnitt aufweisen. In Abbildung (d) ist ein Schwenkelement 34 gezeigt, das als Teilrohrprofil 32b ausgestaltet ist. In Abbildung (d) ist ein Schwenkelement 34 mit einem U-profilförmigen Querschnitt gezeigt.

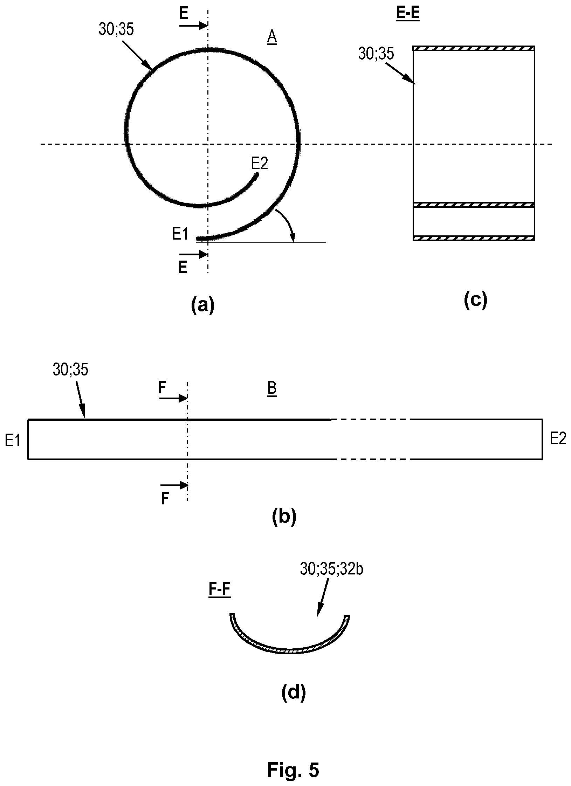

**Fig. 5** zeigt eine Ausgestaltung einer Führungseinrichtung 30 eines nicht erfindungsgemäßen Kanalinspektions- und/oder Wartungssystems. Die Führungseinrichtung 30 weist hier ein federndes bzw. biegsames Element 35 auf, das bei der hier gezeigten Ausgestaltung als Federblech ausgestaltet ist.

In Abbildung (a) ist das Federblech 35 in einer Verstaustellung gezeigt, bei der das Federblech 35 aufgerollt ist. In Abbildung (b) ist das in Abbildung (a) gezeigte Federblech 35 in einer Gebrauchsstellung gezeigt, bei der das Federblech 35 vollständig ausgerollt ist.

Im ausgerollten Zustand, d.h. in der Gebrauchsstellung bildet das Federblech 35 eine weitgehend geradlinige bzw. lineare Führung für das Satellitensystem 20. Es ist aber auch möglich, dass das Federblech 35 in der Gebrauchsstellung, d.h. im ausgerollten Zustand leicht bogenförmig verläuft ist und dadurch eine bogenförmige Führung des Satellitensystems 20 entlang der Führungseinrichtung 30 ermöglicht.

In der Verstaustellung, d. h. im aufgerollten Zustand ist das Federblech 35 weitgehend flach ausgestaltet, wie in Abbildung (c) ersichtlich ist, wobei die Abbildung (c) einen Querschnitt entlang der Schnittachse E-E zeigt. Im ausgerollten Zustand, d.h. in der Gebrauchsstellung kann sich das Federblech 35 zu einer Halbschale bzw. zu einem Teilrohrprofil verformen. Ein Querschnitt entlang der Schnittachse F-F des Federblechs 35 im ausgerollten Zustand bzw. in der Gebrauchsstellung ist in Abbildung (d) gezeigt. Die Form der Halbschale bzw. die Teilrohr-profilförmige Form im ausgerollten Zustand kann in dem Federblech 35 eingeprägt sein, sodass das Federblech 35 beim Ausrollen bzw. nach dem Ausrollen automatisch die Form der Halbschale bzw. des Teilrohrprofils einnimmt.

Das Federblech 35 ist so ausgestaltet, dass es entgegen seiner Federkraft wieder in die Verstaustellung gebracht werden kann, d.h. aufgerollt werden kann.

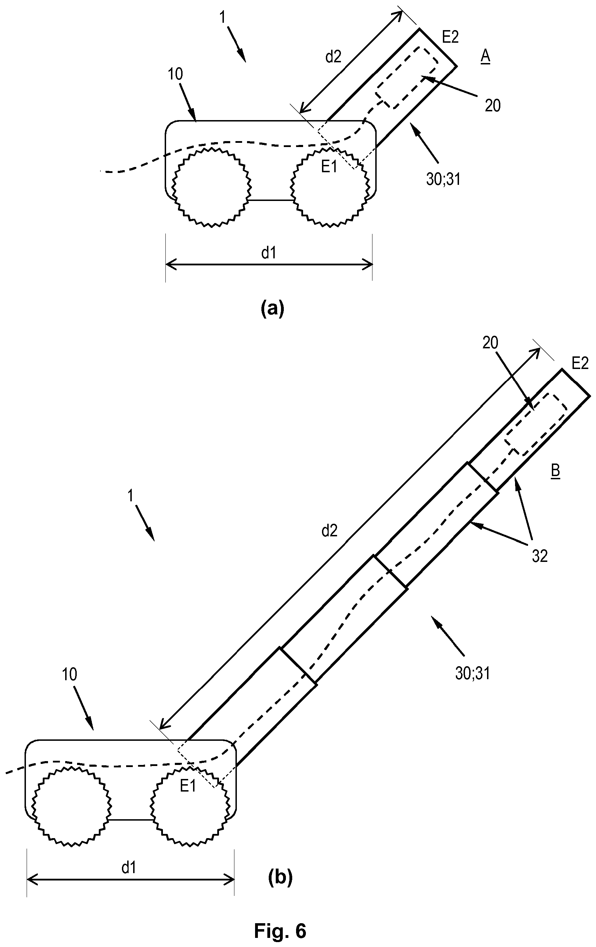

**Fig. 6** zeigt ein erfindungsgemäßes Kanalinspektions- und/oder Wartungssystem 1 mit einer daran angeordneten erfindungsgemäßen Führungseinrichtung 30, wobei in Abbildung (a) die Führungseinrichtung 30 in einer Verstaustellung und in Abbildung (b) die Führungseinrichtung 30 in einer Gebrauchsstellung gezeigt ist.

Bei der in Fig. 6 gezeigten Führungseinrichtung 30 handelt es sich beispielhaft um eine teleskopierbare Führungseinrichtung 31, die zur Vergrößerung der effektiven Führungslänge ausgefahren werden kann.

Die in Fig. 6 gezeigte teleskopierbare Führungseinrichtung 31 weist vier ineinander verschiebbare Teleskopelemente 32 auf, sodass die effektive Führungslänge d2 der teleskopierbaren Führungseinrichtung 31 in der Gebrauchsstellung etwa viermal so lang ist wie die effektive Führungslänge d2 der teleskopierbaren Führungseinrichtung 31 in der Verstaustellung.

Die Führungseinrichtung 30 ist mit ihrem ersten Ende E1 an dem Trägersystem 10 angeordnet, vorzugsweise schwenkbar an dem Trägersystem 10 angeordnet. Das Trägersystem 10 ist bei der in Figur 6 gezeigten Ausgestaltung des erfindungsgemäßen Kanalinspektions- und/oder Wartungssystems als Fahrwagen ausgestaltet.

Die in Fig. 3 bis Fig. 5 gezeigten Führungseinrichtungen können ebenfalls mit dem ersten Ende E1 an dem Trägersystem 10 angeordnet werden. Auch diese Führungseinrichtungen 30 können schwenkbar an dem Trägersystem angeordnet sein.

Die in Fig. 3 gezeigte Führungseinrichtung 30 kann aber auch mit dem zweiten Ende E2 an dem Trägersystem 10 angeordnet werden, sodass sich der Durchmesser der Führungseinrichtung 30 in der Gebrauchsstellung in Richtung zum freien Ende der Führungseinrichtung allmählich vergrößert.

Anstelle eines als Fahrwagen ausgestalteten Trägersystems 10 kann beispielsweise auch ein Schiebeaal als Trägersystem verwendet werden, wobei an dem vorderen, d.h. an dem freien Ende des Schiebeaals die Führungseinrichtung 30 angeordnet sein kann, vorzugsweise schwenkbar angeordnet sein kann.

Zusammen mit dem Schiebeaal wird auch das Satellitensystem 20 in den Kanal verbracht und in dem Kanal vorgeschoben. Nach Erreichen des zu inspizierenden Seitenkanals kann das Satellitensystem 20 von dem Schiebeaal aus über die Führungseinrichtung 30 in den Seitenkanal eingeschoben werden.

Bei dem vorstehend gezeigten Kanalinspektions- und/oder Wartungssystem 1 können Stellmittel bzw. Antriebseinheiten vorgesehen sein, mit denen die jeweilige Führungseinrichtung 30 von einer Verstaustellung in eine Gebrauchsstellung bzw. von der Gebrauchsstellung zurück in die Verstaustellung gebracht werden kann. Diese Stellmittel bzw. Antriebseinheiten können entweder an dem Trägersystem 10 oder an der Führungseinrichtung 30 selbst angeordnet sein.

Bei einer teleskopartigen Führungseinrichtung 30 (wie etwa in Fig. 3 gezeigt) oder bei einer klappbaren Führungseinrichtung 30 (wie etwa in Fig. 4 gezeigt) können als Stellmittel beispielsweise Spindelantriebe oder Bowdenzügen vorgesehen werden.

Bei einer teleskopartigen Führungseinrichtung 30 mit kreisrundem Querschnitt können die Teleskopelemente 32 selbst als Spindel ausgeführt werden, sodass ein Teleskopelement durch Drehen um seine Längsachse relativ zum anderen Teleskopelement verschoben werden kann.

Bei einer nicht erfindungsgemäßen, klappbaren Führungseinrichtung 30 sind auch Servomotoren, Federmechanismen, Seilzüge oder Bowdenzügen sowie Kombinationen hiervon als Stellmittel möglich.

Bei einer nicht erfindungsgemäßen, ausrollbaren Führungseinrichtung 30 (wie etwa in Fig. 5 gezeigt) kann beispielsweise ein Rollantrieb als Stellmittel vorgesehen sein, der die Führungseinrichtung aus einem Aufrollbehälter herausschiebt.

In einer Ausgestaltung der Erfindung kann auch das Satellitensystem 20 selbst als Stellmittel verwendet werden, sodass ein Bewegen des Satellitensystems 20 entlang der Führungseinrichtung 30 ein Ausfahren der Führungseinrichtung 30 bewirkt.

Bei einer teleskopierbaren Führungseinrichtung kann das Satellitensystem 20 beispielsweise mit dem innersten der ineinander verschiebbaren Teleskopelemente 32 lösbar gekoppelt sein, sodass das Satellitensystem 20 bei einem Vorschub das innerste der Teleskopelemente 32 mitnimmt. Die Teleskopelemente 32 können hierbei so miteinander gekoppelt sein, dass ein Teleskopelement jeweils das nächst größere Teleskopelement mitnimmt. Nach Erreichen der gewünschten Führungslänge der teleskopierbaren Führungseinrichtung 31 kann das Satellitensystem 20 von dem innersten Teleskopelement entkoppelt werden, sodass das Satellitensystem 20 relativ zu diesem Teleskopelement verschoben und in den Seitenkanal eingeschoben werden kann.

In umgekehrter Richtung, d. h. beim Herausziehen des Satellitensystems 20 aus dem Seitenkanal, kann das Satellitensystem wieder mit dem innersten Teleskopelement 32 gekoppelt werden, sodass im weiteren Verlauf die Teleskopelemente 32 wieder ineinander verschoben werden und so die teleskopierbare Führungseinrichtung 31 wieder in die Verstaustellung gebracht wird. Nach Erreichen der Verstaustellung kann das Satellitensystem wieder von dem innersten Teleskopelement entkoppelt werden.

Bei einer klappbaren Führungseinrichtung 30 (wie etwa in Fig. 4 gezeigt) können den Schwenkelementen 34 Federelemente zugeordnet sein, die die Schwenkelemente in der Verstaustellung halten. Bei einem Vorschub des Satellitensystems 20 können die einzelnen Schwenkelemente dann nacheinander gegen die Federkraft der Federelemente aufgeklappt werden. Durch die relativ große Steifigkeit des Kabels bzw. des Schiebeaals des Satellitensystems werden die aufgeklappten Schwenkelemente im aufgeklappten Zustand gehalten. Bei Herausziehen des Satellitensystems aus dem Seitenkanal werden die aufgeklappten Schwenkelemente nacheinander wieder freigegeben und die Federkraft der Federelemente bewirkt, dass die Schwenkelemente wieder zusammengeklappt werden.

In ähnlicher Weise kann auch bei einer ausrollbaren Führungseinrichtung 30 (wie etwa in Fig. 5 gezeigt) die Federkraft des Federblechs 35 genutzt werden. Bei einem Vorschub des Satellitensystems 20 wird das Federblech gegen seine Federkraft ausgerollt. Beim Herausziehen des Satellitensystems aus dem Seitenkanal bewirkt die Federkraft des Federblechs, dass sich das Federblech selbstständig aufrollt und so in die Verstaustellung zurückkehrt.

**Fig. 7** zeigt zwei Beispiele eines als Teilrohrprofil 32b ausgestalteten Teleskopelements 32. In Abbildung (a) weist das Teilrohrprofil 32b einen Kreisring-segmentförmigen Querschnitt auf, d.h. ein Abschnitt der Seitenwandung des Rohres ist zwischen dem einen Ende des Rohres und dem anderen Ende des Rohres ausgespart, sodass das Teilrohrprofil 32b zwei parallel zur Längsachse LA und zueinander parallel verlaufende Profilkanten 33 aufweist.

In Abbildung (b) ist ein Teilrohrprofil 32b gezeigt, das einen im Wesentlichen U-profilförmigen Querschnitt aufweist. Auch dieses in Abbildung (b) gezeigte Teilrohrprofil 32b weist zwei parallel zueinander und parallel zur Längsachse LA verlaufende Profilkanten 33 auf.

Selbstverständlich können die für eine Führungseinrichtung 30 verwendeten Teilrohrprofile auch einen anderen Profilquerschnitt aufweisen. Voraussetzung ist lediglich, dass sich das Profil für eine sichere Führung des Satellitensystems entlang des Trägersystems eignet und dass die einzelnen Elemente der Führungseinrichtung im Sinne der vorliegenden Erfindung ausfahrbar oder aufklappbar bzw. einfahrbar und zusammenklappbar sind.

**Fig. 8** zeigt eine weitere Ausgestaltung einer erfindungsgemäßen Führungseinrichtung mit einem daran angeordneten Satellitensystem, wobei in Abbildung (a) das System in einer perspektivische Ansicht gezeigt ist, und wobei in den Abbildungen (b) und (c) zwei mögliche Querschnitte des Systems gezeigt sind.

Bei der in Fig. 8 gezeigten Führungseinrichtung 30 handelt es sich um eine teleskopierbare Führungseinrichtung mit relativ zueinander verschiebbaren Teleskopelementen, wie beispielsweise in Fig. 3 gezeigt. In Abbildung (b) weist die Führungseinrichtung 30 einen runden Querschnitt auf, während die in Abbildung (c) gezeigte Führungseinrichtung 30 einen T-förmigen Querschnitt aufweist. Prinzipiell kann die Führungseinrichtung verschiedene Querschnitte aufweisen, wobei lediglich gewährleistet sein muss, dass sich die einzelnen Teleskopelemente relativ zueinander verschieben lassen. In einer Ausgestaltung der Erfindung sind die relativ zueinander verschiebbaren Teleskopelemente ineinander verschiebbar.

Bei der in Fig. 8 gezeigten Ausgestaltung wird die Führungseinrichtung 30 von dem Satellitensystem 20 umgriffen (Abbildung (b)) bzw. teilweise umgriffen (Abbildung (c)), sodass das Satellitensystem 20 entlang der Führungseinrichtung 30 bewegt werden kann.

Bei dem in Fig. 8 gezeigten System kann die Führungseinrichtung 30 in nicht erfindungsgemäßer Ausführung auch als ausklappbare oder ausrollbare Führungseinrichtung ausgestaltet sein, wie in Fig. 4 bzw. Fig. 5 gezeigt. Nach dem Ausklappen bzw. Ausrollen der Führungseinrichtung kann das Satellitensystem 20, das die Führungseinrichtung 30 ganz oder teilweise umgreift, entlang der Führungseinrichtung bewegt werden.

### Bezugszeichen:

- 1: Kanalinspektions- und/oder Wartungssystem
- 10: Trägersystem (z.B. Fahrwagen) des Kanalinspektions- und/oder Wartungssystems 1
- 20: Satellitensystem des Kanalinspektions- und/oder Wartungssystems 1
- 30: Führungseinrichtung des Kanalinspektions- und/oder Wartungssystems 1
- 31: teleskopierbare Führungseinrichtung, z.B. Teleskoprohr
- 32: ineinander verschiebbare Teleskopelemente der teleskopierbaren Führungseinrichtung 31
- 32a: Vollrohrprofil
- 32b: Teilrohrprofil, z.B. Halbrohrprofil
- 33: (axial und vorzugsweise parallel verlaufende) Profilkanten des Teilrohrprofils 32b
- 34: Schwenkelemente
- 35: Federblech
- 40: Führungsmittel, z.B. Nut-Feder-Linearführung
- A: Verstaustellung der Führungseinrichtung 30
- B: Gebrauchsstellung der Führungseinrichtung 30
- d: Abstand / Distanz zwischen dem freien Ende der Führungseinrichtung 30 und dem Zugang zum Seitenkanal SK
- d1: Länge des Trägersystems 10
- d2: Länge der Führungseinrichtung 30
- E1: erstes Ende der Führungseinrichtung 30, an dem die Führungseinrichtung an dem Trägersystem (z.B. lösbar) befestigt wird
- E2: zweites, freies Ende der Führungseinrichtung 30
- K: Kanal bzw. Hauptkanal
- LA: Längsachse
- SK: Seitenkanal

## Patentansprüche

1. Kanalinspektions- und/oder Wartungssystem (1), zumindest aufweisend
- ein Trägersystem (10),
- ein Satellitensystem (20), das relativ zum Trägersystem bewegbar ist, und
- eine mit dem Trägersystem (10) gekoppelte Führungseinrichtung (30), entlang der das Satellitensystem (20) während einer Bewegung relativ zum Trägersystem (10) führbar ist,
**dadurch gekennzeichnet, dass**
die Führungseinrichtung (30) von einer Verstaustellung (A) in wenigstens eine Gebrauchsstellung (B) ausfahrbar ist.

2. System nach dem vorhergehenden Anspruch, wobei die Führungseinrichtung (30) lösbar mit dem Trägersystem (10) gekoppelt ist.

3. System nach einem der vorhergehenden Ansprüche, wobei die effektive Länge der Führungseinrichtung (30), entlang der das Satellitensystem (20) während einer Bewegung relativ zum Trägersystem (10) führbar ist, durch Ausfahren der Führungseinrichtung (30) vergrößerbar ist.

4. System nach einem der vorhergehenden Ansprüche, wobei die Führungseinrichtung (30) reversibel von der Verstaustellung (A) in die wenigstens eine Gebrauchsstellung (B) ausfahrbar ist.

5. System nach einem der vorhergehenden Ansprüche, wobei die Führungseinrichtung (30) teleskopierbar ausgestaltet ist und von der Verstaustellung (A) in die wenigstens eine Gebrauchsstellung (B) ausfahrbar ist.

6. System nach dem vorhergehenden Anspruch, wobei relativ zueinander verschiebbare Teleskopelemente (32) der teleskopierbaren Führungseinrichtung (31) als Vollrohrprofile (32a) und/oder als Teilrohrprofile (32b) ausgestaltet sind.

7. System nach einem der vorhergehenden Ansprüche, wobei der Führungseinrichtung (31) eine Antriebseinheit zugeordnet ist, die angepasst ist, die Führungseinrichtung (30) von der Verstaustellung (A) in die wenigstens eine Gebrauchsstellung (B) auszufahren.

## Claims

1. Sewer inspection and/or maintenance system (1), at least having
- a carrier system (10),
- a satellite system (20) which is movable relative to the carrier system, and
- a guide device (30) coupled to the carrier system (10), along which the satellite system (20) can be guided during a movement relative to the carrier system (10),
**characterized in that**
the guide device (30) can be extended from a stowed position (A) into at least one use position (B).

2. System according to the preceding claim, wherein the guide device (30) is detachably coupled to the carrier system (10).

3. System according to one of the preceding claims, wherein the effective length of the guide device (30), along which the satellite system (20) can be guided during a movement relative to the carrier system (10), can be enlarged by extending the guide device (30).

4. System according to one of the preceding claims, wherein the guide device (30) is reversibly extendable from the stowed position (A) into the at least one use position (B).

5. System according to one of the preceding claims, wherein the guide device (30) is designed to be telescopic and can be extended from the stowed position (A) into the at least one use position (B).

6. System according to the preceding claim, wherein telescopic elements (32) of the telescopic guide device (31) which can be displaced relative to one another are designed as solid tube profiles (32a) and/or as partial tube profiles (32b).

7. System according to one of the preceding claims, wherein the guide device (31) is assigned a drive unit which is adapted to extend the guide device (30) from the stowed position (A) into the at least one use position (B).

## Revendications

1. Système d'inspection et/ou d'entretien de canalisations (1), présentant au moins
- un système de support (10),
- un système satellite (20) qui est mobile par rapport au système de support, et
- un dispositif de guidage (30) accouplé au système de support (10), le long duquel dispositif de guidage le système satellite (20) peut être guidé pendant un mouvement par rapport au système de support (10),
**caractérisé en ce que**
le dispositif de guidage (30) peut être déployé depuis une position de rangement (A) vers au moins une position d'utilisation (B).

2. Système selon la revendication précédente, dans lequel le dispositif de guidage (30) est accouplé de manière amovible au système de support (10).

3. Système selon l'une des revendications précédentes, dans lequel la longueur effective du dispositif de guidage (30), le long de laquelle le système satellite (20) peut être guidé pendant un mouvement par rapport au système de support (10), peut être augmentée en déployant le dispositif de guidage (30).

4. Système selon l'une des revendications précédentes, dans lequel le dispositif de guidage (30) peut être déployé de manière réversible depuis la position de rangement (A) vers l'au moins une position d'utilisation (B).

5. Système selon l'une des revendications précédentes, dans lequel le dispositif de guidage (30) est conçu de manière télescopique et peut être déployé depuis la position de rangement (A) vers l'au moins une position d'utilisation (B).

6. Système selon la revendication précédente, dans lequel des éléments télescopiques (32) du dispositif de guidage (31) télescopique, lesquels peuvent être déplacés les uns par rapport aux autres, sont conçus en tant que profilés tubulaires pleins (32a) et/ou en tant que profilés tubulaires partiels (32b).

7. Système selon l'une des revendications précédentes, dans lequel le dispositif de guidage (31) est associé à une unité d'entraînement qui est adaptée pour déployer le dispositif de guidage (30) depuis la position de rangement (A) vers l'au moins une position d'utilisation (B).
